# EUROPÄISCHE PATENTSCHRIFT

(11) **EP 0 342 373 B1**
(45) Veröffentlichungstag und Bekanntmachung des Hinweises auf die Patenterteilung: **13.10.1993**
(21) Anmeldenummer: 89107014.6
(22) Anmeldetag: 19.04.1989
(51) Int. Cl.: B65B 3/02, B31B 1/28

(54) **Verfahren zum Fördern einer einseitig verschlossenen Hülse aus einer Bearbeitungsstation in eine Transporteinrichtung und Vorrichtung zur Durchführung dieses Verfahrens**
Method for conveying a sleeve closed at one side from a shaping station to a transport device, and apparatus for performing the method
Procédé pour convoyer une douille à fermeture unilatérale d'une station d'usinage dans une installation de transport et dispositif pour réaliser ce procédé

(30) Priorität: 14.05.1988 DE 3816542
(43) Veröffentlichungstag der Anmeldung: 23.11.1989
(73) Patentinhaber: Tetra Laval Holdings & Finance SA, 1009 Pully (CH)
(72) Erfinder: Reil, Wilhelm, D-6142 Bensheim 1 (DE)
(74) Vertreter: Weber, Dieter, Dr.

(56) Entgegenhaltungen:
- DE-B- 1 941 497
- DE-B- 2 520 504
- US-A- 2 446 798
- US-A- 2 971 442

## Beschreibung

Die Erfindung betrifft ein Verfahren zum Fördern einer einseitig verschlossenen Hülse aus Papier, Pappe oder dergleichen von einem sie tragenden, in der Anfangsposition befindlichen, schrittweise bewegbaren Dorn einer Bearbeitungsstation in eine Transporteinrichtung, bei welchem die Hülse an ihren in Förderrichtung hinteren Kanten erfaßt und in Richtung ihrer Längsachse auf einem geraden Weg in die Transporteinrichtung geschoben wird, während Luft in das Innere der Hülse eingeblasen wird.

Die vorliegende Erfindung richtet sich auf den Herstellungsschritt nach dem einseitigen Verschließen der Hülse bis zur Überleitung in eine Füllstation.

Es ist bekannt, aus einer von einer Vorratsrolle abgezogenen Papierbahn, die wenigstens einseitig mit Kunststoff beschichtet ist, um sie flüssigkeitsdicht zu machen, eine tubusförmige oder schlauchförmige Hülse zu bilden, meistens durch Anbringen einer Längssiegelnaht an einem abgeschnittenen Teil der Bahn, wobei Höhe oder Breite dieses Teils gleich der Länge der Längssiegelnaht ist.

Ein solcher zunächst beidseitig offener Tubus oder eine solche Hülse wird einseitig, nämlich auf der später den Deckel bildenden Seite, mit Kunststoff ohne Trägermaterial dadurch verschlossen, daß man die Papierhülse auf einen Dorn derart weit aufschiebt, daß längs der am freien Ende des Dornes angeordneten Kante des Papiertubus, die übrigens durch den Schnitt nicht mehr mit Kunststoff beschichtet ist, der spätere Deckel, vorzugsweise mit Ausgießöffnung, flüssigkeitsdicht angespritzt wird. Eine solche einseitig verschlossene Hülse wird dann vom Dorn abgezogen, mittels einer Transporteinrichtung zur Füllstation gefördert, dort gefüllt, auf der dem Deckel gegenüberliegenden Seite nachfolgend verschlossen und in der üblichen Weise weiterbehandelt.

Die vorliegende Erfindung befaßt sich mit dem Abziehen oder Abstreifen der Hülse vom Dorn und Einführen in die Transporteinrichtung, die im allgemeinen die einseitig verschlossene Hülse dann vertikal stehend, so daß die Flüssigkeit von oben nach unten in Lotrichtung eingefüllt werden kann, auf horizontalem Wege in die Förderrichtung transportiert.

Es ist schwierig, die Hülse nach dem Anspritzen des Kunststoffdeckels in kurzer Zeit vom Dorn abzuziehen. Auch wenn die Hülse nicht auf einem Dorn sitzen würde, wäre es schwierig, sie in kurzer Zeit von einer Bearbeitungsstation, in weicher z.B. der Deckel angespritzt wurde, in die Transporteinrichtung zu fördern. Natürlich ist dieses Fördern grundsätzlich möglich, und es ist z.B. aus der DE-B-1.941.497 bekannt, von einem Dorn, um den ein Blatt aus Karton zur Bildung eines Tubus gefaltet wird, mittels Streiffingern eines hin- und herbeweglichen Mechanismus den Tubus abzuziehen, wobei auch eine Druckluftquelle zur Unterstützung verwendet wird. Offensichtlich liegen die Streiffinger in der Bewegungsbahn der rotierenden Dorne, so daß nach dem Abziehen des ersten Tubus von dem ersten Dorn dieser aus der Abzugsposition herausbewegt und der zweite, nächste Dorn mit dem zweiten Tubus darauf erst bis in die Abziehposition wieder hereinbewegt werden muß, bevor die Streiffinger ihre Rückbewegung beginnen. Dadurch wird der Arbeitstakt, d.h. die Schaltzeit der Maschine mit dem Dornrad, länger mit dem Nachteil einer geringeren Gesamtleistung der Maschine.

Wenn aber Flüssigkeitspackungen von der Bahn hergestellt und in großer Geschwindigkeit mit hoher Stückzahl produziert werden, müssen ein Verfahren vorgesehen und eine entsprechende Vorrichtung geschaffen werden, mit denen das Umsetzen von der Bearbeitungsstation in die Transporteinrichtung in sehr kurzer Zeit erfolgt. Nur dann nämlich kann die hohe Stückzahl pro Zeiteinheit an fertiggestellten Packungen erreicht werden. Die Leistung einer solchen Packungsherstellungsmaschine (Anzahl Packungen pro Zeiteinheit) hängt stets von derjenigen Stelle im Verfahren oder der Vorrichtung ab, wo sich zeitlich ein Engpaß ergibt.

Besonders erschwert wird das Abziehen noch dadurch, daß die Hülse einseitig besonders dicht verschlossen ist, weshalb Luft von außen nachgedrückt wird. Dies ist besonders kritisch für den Fall, daß die Hülse und damit auch ihre Kante, an welcher der Deckel aus Kunststoff ohne Trägermaterial angespritzt werden soll, zu lose auf dem Dorn aufsitzt und beim Spritzen der Kunststoff in die durch die Lose ermöglichten Spalte gepreßt wird, so daß die Packung nicht nur unansehnlich, sondern auch undicht wird.

Der Erfindung liegt daher die Aufgabe zugrunde, ein Verfahren zum Fördern einer einseitig verschlossenen Hülse mit den eingangs erwähnten Merkmalen und eine Vorrichtung zur Durchführung eines solchen Förderverfahrens zu schaffen, mit denen es trotz der ersichtlichen Schwierigkeiten möglich ist, Hülsen in kurzer Zeit von einer Bearbeitungsstation in eine Transporteinrichtung zu fördern, selbst wenn es sich um durch Anspritzen eines Deckels einseitig verschlossene Papierhülsen handelt, um insbesondere eine Leistungssteigerung zu erreichen.

Hinsichtlich des Verfahrens wird die Aufgabe gemäß den Merkmalen des Anspruchs 1 gelöst.

Für den hier angesprochenen Fall, daß die Hülse von einem Dorn getragen wird, ergibt sich die besonders praktische Ausführungsform, daß dieser Dorn als Innenform einer Spritzeinrichtung (Bearbeitungsstation) dient, während die Außenform, vorzugsweise zweiteilig, selbstverständlich von außerhalb der Hülse an die Stirnfläche des Dorns heranbewegt und dort unter Verschließen des Spritzraumes in geeignete Position gefahren wird. Nach Öffnen der Außenform befindet sich die einseitig verschlossene Papierhülse auf dem sie tragenden Dorn, und diese Stellung wird als die Anfangsposition bezeichnet, weil es sich im Falle der vorliegenden Erfindung um die Bewegung vom Dorn in die Transporteinrichtung handelt. Das mit den vorstehenden Merkmalen beschriebene ''Herunterziehen" der Hülse vom Dorn kann selbstverständlich auch als "Herunterschieben" bezeichnet werden, je nachdem, von wo aus man die Bewegung betrachtet.

Es versteht sich, daß ein Abstreifer über die auf dem Dorn sitzende Hülse hinwegbewegt werden muß, damit er die Hinterkante der Hülse erreichen und erfassen kann, und während des Herunterschiebens der Hülse vom Dorn am Dorn soweit vorbeibewegt werden muß, bis auch die Hinterkante der Papierhülse vom Dorn frei wird.

Wird in an sich bekannter Weise ein Dornrad verwendet, von dem sternförmig mehrere Dorne radial nach außen ragen, dann kann nach dem Freibewegen des Abstreifers vom Dorn letzterer aus seiner sogenannten Anfangsposition in eine weitere, für die Erfindung hier nicht interessante Position bewegt werden. Im Falle eines solchen Dornrades oder auch, wenn auf andere WEise ein nächster Dorn mit frisch angespritztem Deckel an der Papierhülse heranbewegt wird, befindet sich dann dieser nächste Dorn wieder in seiner Anfangsposition. Inzwischen muß der Abstreifer möglichst wieder seine Ausgangsstellung erreichen.

Naheliegend wäre es für den Fachmann, nach Fortbewegen des ersten leeren Dornes zunächst zu warten, bis der zweite, eine einseitig verschlossene Hülse tragende Dorn wieder in der Anfangsposition steht, um den Abstreifer dann wieder in seine Ausgangsstellung zu bewegen. Diese Stellung ist dort zu denken, von wo aus kurz nach Beginn der Bewegung der Abstreifer in der Lage ist, mit der hinteren Kante der Hülse in Eingriff zu gelangen. Man versteht aber sogleich, daß hierdurch wertvolle Zeit im Arbeitstakt der Packungsmaschine verschenkt würde.

Aus diesem Grunde ist aber vorgesehen, daß die Hülse nicht auf ihrer gesamten Hinterkante, sondern nur auf einem Teil der Hinterkante, welcher höchstens die Hälfte der Kante ausmacht, von dem Abstreifer erfaßt wird. Die Bedenken des Fachmannes mußten für diese Maßnahme umso stärker hervortreten, denn die gesamte Kraft und damit der Druck auf die Innenkante, um die Hülse mit ausreichender Beschleunigung vom Dorn abzuziehen, muß über einen Bruchteil der Hinterkante auf das Hülsenmaterial übertragen werden. Es hat sich aber gezeigt, daß man eine solche Förderung durchaus wagen kann, insbesondere dann, wenn geeignete Förderungsmittel vorgesehen werden, wie nachfolgend noch beschrieben wird.

Der überraschende Vorteil, der sich durch das nur teilweise Erfassen der Hinterkante der Hülse erreicht wird, liegt in einer Zeitersparnis. Während nämlich nach Verlassen des ersten leeren Dornes der zweite Dorn mit der nächsten verschlossenen Hülse in seine (für das Abstreifen) Anfangsposition hereinbewegt wird, kann jetzt erfindungsgemäß nämlich der Abstreifer bereits in seine Ausgangsstellung bewegt werden, während der Dorn noch nicht seine Anfangsposition erreicht hat. Vorzugsweise erreicht der Dorn mit der nächsten Hülse seine Anfangsposition, wenn etwa der Abstreifer auch seine Ausgangsstellung erreicht. Kleine Zeitdifferenzen können hier vernachlässigt werden.

Nach dem Abziehen der Hülse vom Dorn wird dieser leere Dorn aus seiner Anfangsposition wegbewegt und ein neuer Dorn mit Hülse in die Anfangsposition bewegt. Mit diesen Merkmalen erreicht man die besonders kurze Zeit, bis beide in Eingriff miteinander kommenden Teile, nämlich Abstreifer und Hülse, wieder in Anfangsposition bzw. Ausgangsstellung gelangen. Der Takt der Herstellungsmaschine kann auf diese Weise verkürzt und damit die Leistung der Packungsmaschine erhöht werden.

Die vorstehend erwähnte Aufgabe wird hinsichtlich der Vorrichtung zum Fördern einer Hülse aus Papier, Pappe oder dergleichen von einer Bearbeitungsstation mit Dorn in eine Transporteinrichtung, bei welcher ein mit der in Förderrichtung hinteren Kante der Hülse in Eingriff bringbarer Abstreifer translatorisch bewegbar vorgesehen und antreibbar ist, dadurch gelöst, daß sich erfindungsgemäß der Abstreifer auf einem geraden Weg von einer Ausgangsstellung in eine Endstellung und zurück bewegt, an einer in Richtung ihrer Längsachse bewegbaren Hubstange angebracht ist und, in Richtung dieser Längsachse gesehen, höchstens den halben Umfang des Dornes umfaßt. Die Hubstange erlaubt die Durchführung einer schnellen, translatorischen Bewegung in ihrer Längsachse, und deshalb wird der Abstreifer über eine Hubstange gehaltert und bewegt.

Will man runde und vorzugsweise im Querschnitt kreisförmige Papierhülsen in der erfindungsgemäß angegebenen Weise fördern, dann bildet man den Abstreifer entsprechend dem Hülsenumfang bzw. entsprechend dem Verlauf der Hülsenhinterkante rund aus. Denkbar ist aber auch eine Hülse mit rechteckigem oder quadratischem Querschnitt. Hierbei hat sich gezeigt, daß das Abstreifen über zwei der vier Kanten möglich ist, so daß der Abstreifer V-Form erhält. Aus dieser Gestalt des Abstreifers ergibt sich der vorstehend bereits erläuterte Vorteil, daß nämlich nach Herausfahren des leeren ersten Dornes, wenn sich der Abstreifer in der Endstellung befindet, der zweite, eine weitere Hülse tragende Dorn in seine Anfangsposition bewegt werden kann, während gleichzeitig der Abstreifer in seine Ausgangsstellung zurückbewegt wird. Denkt man sich bei einer bevorzugten speziellen Ausführungsform den durch das V eingeschlossenen Winkel auf etwa 90° oder mehr, dann ist sogleich ersichtlich, daß das V - immer in Richtung der Längsachse der Hubstange gesehen - einen nur auf einer Hälfte oder weniger eingeschlossenen Raum vorgibt, während auf der gegenüberliegenden Seite, vorzugsweise der der Spitze bzw. Kante des V gegenüberliegenden Seite, der Raum offen ist, und gerade in diesen offenen Raum soll und kann erfindungsgemäß der zweite Dorn mit der nächsten Hülse einfahren, wenngleich das V schon dasteht bzw. wenngleich der in der genannten Richtung gesehen V-förmig ausgestaltete Abstreifer schon wieder auf dem Wege in seine Ausgangsstellung ist oder sich gar bereits in dieser befindet. Der die nächste Hülse tragende zweite Dorn soll möglichst schnell in seine Anfangsposition bewegt werden und ist durch die V-förmige Ausgestaltung des Abstreifers in der Lage, diese Anfangsposition ohne Rücksicht auf die Lage des Abstreifers zu erreichen. Ersichtlich kann die Leistung der Maschine hierdurch erheblich gesteigert werden.

Vorteilhaft ist es gemäß der Erfindung ferner, wenn der Abstreifer V-förmige aus gestattet ist und einen winkelförmigen Träger aufweist, der an den zwei einander zugewandten Innenkanten des V federbelastete, in Richtung senkrecht zur Innenkante bewegbare Greifblöcke haltert. Der Träger stellt das starre, halternde Stützteil des Abstreifers dar, welches über die Hubstange in kurzer Taktfolge bzw. schnell translatorisch bewegt werden kann. Es ist im allgemeinen aber extrem schwierig, ein derart starres Teil mit einer Genauigkeit von Millimetern oder gegebenenfalls zehntel Millimetern auf einen sich relativ schnell bewegenden Dorn so aufzufahren, daß die Hinterkante einer Papierhülse mit Sicherheit und zuverlässig ergriffen werden kann, insbesondere wenn nur ein Teil der gesamten, zur Verfügung stehenden Hinterkante vom Abstreifer erfaßt werden soll. Ohne die erfindungsgemäß bewegbar vorgesehenen Greifblöcke wäre ein solcher Abstreifer praktisch nicht durchführbar. Erfindungsgemäß wird nun aber an jeder Innenkante vorzugsweise ein Greifblock bewegbar und federbelastet so vorgesehen, daß die soeben erwähnten Toleranzen gut überbrückbar sind. Es ist güstig, wenn man den Greifblock beispielsweise aus einem weicheren Material als den Dorn oder den Träger herstellt. Während der Dorn, der Träger, die Hubstange und andere Maschinenteile aus Stahl, Aluminium, Messing oder anderen geeigneten Legierungen hergestellt werden, sollte man für die Greifblöcke Kunststoff verwenden, wobei hier insbesondere Teflon zweckmäßig ist. Dieses hat gewisse selbstschmierende Eigenschaften und ermöglicht es somit, die vorderen, der Hubstange zugewandten Kanten der Greifblöcke gegebenenfalls entlang der Oberfläche des Dornes gleiten zu lassen, so daß sie mit Sicherheit in ihrer Ausgangsstellung mit dem in seiner Anfangsposition befindlichen Dorn in Berührung stehen. Dann nämlich ist mit Sicherheit gewährleistet, daß beim Umschalten der translatorischen Bewegungsrichtung die wirkseitigen, dem jeweiligen Dorn zugewandten Kanten der Greifblöcke mit der Hinterkante der Hülse in gewünschten Formeingriff kommen.

Im Falle einer im Querschnitt quadratischen Hülse hat der Träger des Abstreifers die Form eines Winkels, wobei die beiden Schenkel des den Winkel bildenden V sich der Querschnittsform der Hülse anpassen. Dies gilt sowohl für Hülsen mit parallelogrammartigem, trapezförmigem, rechteckigem oder auch quadratischem Querschnitt, um nur einige Beispiele zu wählen. Vorzugsweise verwendet man Hülsen mit quadratischem Querschnitt, so daß der Winkel zwischen den beiden Schenkeln des V 90° beträgt. Dann stehen auch die beiden Innenkanten der Träger unter 90° zueinander. Diese werden als die "einander zugewandten" Innenkanten bezeichnet. Sie haben in Richtung quer zur Längsachse der Hubstange gesehen eine gewisse Fläche, in welcher eine Ausnehmung eingearbeitet ist, wodurch innerhalb des Trägers hinter der jeweiligen Innenkante ein Volumen geschaffen ist, in welchem die Greifblöcke nicht nur untergebracht sondern auch bewegt werden können. Vorzugsweise ist jeder Greifblock relativ zur Innenkante des Trägers bewegbar bzw. verschieblich; und vorzugsweise befindet sich auch hinter jeder Innenkante des Trägers nur ein Greifblock.

Zur leichteren Herstellung des Trägers kann dieser von seiner einen Oberfläche (senkrecht zur Innenkante) ausgefräst werden, um das Volumen für die Aufnahme des Greifblockes zu schaffen. Legt man den Greifblock in dieses Volumen ein, wobei zwei im Abstand voneinander im Träger befestigte Führungszapfen in Langlöcher des Greifblockes eingreifen und ihn führen können, dann liegt die eine Oberfläche des Greifblockes an der Stützfläche des Trägers an, welche innen und parallel zur äußeren Oberfläche des Trägers liegt, die sich senkrecht zur Längsachse der Hubstange erstreckt; während sich die gegenüberliegende Oberfläche des Greifblockes bündig neben der "unteren" Oberfläche des Trägers liegt, welche der erstgenannten Oberfläche gegenüberliegt, wenn man in Richtung der Längsachse der Hubstange von derem freien Ende in Richtung ihrer Befestigung blickt. Die Halterung des Greifblockes in dem Volumen des Trägers hinter der jeweiligen Innenkante des Trägers erfolgt dann zweckmäßigerweise durch ein Halteblech, das man über Schrauben am Träger auf dessen "unterer" Oberfläche befestigt. Dadurch ist das Volumen im Träger hinter der jeweiligen Innenkante auf fünf seiner sechs Seiten (wenn man es rechteckig bzw. parallelepipedisch ansieht) verschlossen.

Für seine Funktion muß der Greifblock aus der Oberfläche des Trägers herausragen, wo die Innenkante vorgesehen ist, d.h. diejenige Fläche des V-förmigen Trägers, die sich der benachbarten Fläche gegenüberliegt. Deshalb ist hier auch von "einander zugewandten Innenkanten" gesprochen. Diese Innenkanten bzw. die einander zugewandten Greifblöcke sind in Draufsicht, d.h. wenn man in Längsachse der Hubstange von ihrem freien Ende aus in Richtung ihrer Befestigung blickt, V-förmig auf der einen Seite geschlossen, wo die Spitze des V zu denken ist, und sind auf der gegenüberliegenden Seite so offen, daß hier während der translatorischen Bewegung des Trägers mit seinen Greifblöcken ein beliebiges Maschinenteil bzw. auch das Werkstück herein-(oder gegebenenfalls auch heraus-) bewegt werden könnte, unbeachtlich der Stellung des Trägers.

Eingangs ist beim Abziehen einer einseitig verschlossenen Papierhülse von einem Dorn bereits von der Schwierigkeit gesprochen worden, daß sich ein Vakuum bilden könnte, wenn die Hülse sehr schnell vom Dorn abgezogen wird. Um dieser Schwierigkeit entgegenzuwirken, ist erfindungsgemäß weiterhin vorgesehen, daß der Dorn eine geschlossene Stirnfläche mit einem einen Luftaustritt bildenden Einsatz und im Inneren Luftkanäle aufweist. Damit der Dorn in der ebenfalls oben schon beschriebenen Weise als Innenform einer Kunststoffspritzeinrichtung verwendet werden kann, muß er eine geschlossene Stirnfläche haben, im Falle eines Dornrades vorzugsweise an seinem freien Ende. Um das Vakuum abzubauen, das sich beim Abziehen der Papierhülse vom Dorn bildet, bläst man Luft über die Stirnfläche hinter den Deckel der Papierhülse. Hierfür ist ein Luftaustritt erforderlich, dem Luftkanäle im Inneren des Dornes Luft zuführen. Da der Kunststoff zur Bildung des Deckels an der Papierhülse mit hohem Druck und bei hoher Temperatur eingespritzt wird, darf der Luftaustritt keine großen Abmessungen haben. In der Praxis hat sich gezeigt, daß der Spalt für den Austritt der Luft nicht größer als 0,05 mm, möglichst schmaler bzw. enger sein sollte. Die sich für den Fachmann hierbei stellenden Schwierigkeiten zur Erstellung derart kleiner Luftaustrittsschlitze werden erfindungsgemäß durch Schaffung eines Einsatzes überwunden. Maschinentechnisch kann man nämlich im Inneren des Dornes geeignet große Luftkanäle (lang genug und mit ausreichendem Durchmesser versehen) bohren, und dann kann man einen mit diesen Luftkanälen verbundenen Raum in Gestalt einer Sackbohrung, vorzugsweise von der geschlossenen Stirnfläche des Dornes aus vorsehen, in welche man den Einsatz einbringt, der beispielsweise wie ein Stopfen ausgebildet ist und den gewünschten schmalen Spalt freiläßt.

Zweckmäßig ist es hierbei, wenn der Spalt einer Breite von weniger als 0,05 mm kreisförmig oder in Gestalt mehrerer konzentrischer Kreise ausgestaltet wird. Dadurch kann man den Luftaustritt in geeigneter Weise eng ausgestalten und dennoch die Gesamtfläche des Luftaustrittes groß genug machen. Bei einer Flüssigkeitspackung mit einem Fassungsvermögen von 1 Liter ist es nämlich bei einer speziellen Ausführungsform einer Packungsmaschine erwünscht, den wesentlichen Teil der Papierhülse in einer halben Sekunde oder weniger vom Dorn abzuziehen. Dies aber bedeutet, daß man in einer Zeit von 0,6 bis 0,3 Sekunden, vorzugsweise 0,4 oder 0,5 Sekunden ein Liter Luft durch den Luftaustritt am Einsatz, bei der gedachten bevorzugten Ausführungsform durch den Kreisschlitz mit einer Breite von 0,03 mm, in den Raum hinter der Hülse einbläst. Die Zahlen- und Größenangaben machen dem Fachmann klar, welche Vorteile durch die erfindungsgemäßen Maßnahmen erreichbar sind.

Es wurde eingangs auf den Vorteil hingewiesen, der sich hinsichtlich der Vereinfachung des Spritzwerkzeuges dadurch ergibt, daß man den Dorn mit, auf welchem die Papierhülse aufgeschoben ist, als Innenform verwendet. Die der oben vielfach erwähnten sogenannten hinteren Kante der Hülse gegenüberliegende vordere Kante soll den Deckel aus Kunststoff angespritzt erhalten. Nach dem Aufschieben der Papierhülse auf den entsprechenden Dorn mit geschlossener Stirnfläche muß diese vordere Kante der Hülse in geringem Abstand von der rechteckigen oder quadratischen, geraden Kante des Dornes positioniert werden. Gerade bei Hülsen mit viereckigem Querschnitt, wenn die Seitenflächen zwischen den vier Endkanten eben sind, ergibt sich beim Einspritzen die Schwierigkeit, daß zwischen der entsprechend ebenen Außenfläche des Dorns und der ebenen Seitenwandung der Hülse unerwünschte Spalte entstehen, in welche beim Einspritzen von Kunststoff zur Erstellung des Deckels der Hülse Kunststoff unerwünscht hineingedrückt wird. Beim Abziehen wären solche Spalte für den Lufteintritt zwar günstig, das Anspritzen aber hat herstellungstechnisch Vorrang. Also werden erfindungsgemäß Mittel vorgesehen, um diese unerwünschten Spalte zu beseitigen. Zur Bildung einer Schließkante im oberen, stirnflächenseitigen Bereich des Dornes ist dieser an seinem Umfang daher so ausgestaltet, daß er eine Erweiterung aufweist. Diese Erweiterung ist praktisch eine Art Wulst, der sich ringförmig bzw. streifenförmig auf einer Höhe des Dorns und dessen ganzen Umfang herum erstreckt. Beim Aufschieben der Papierhülse auf den Dorn muß diese zwar über die Erweiterung oder den Wulst hinübergeschoben werden, wie schon ausgeführt bietet das Aufschieben aber weniger Schwierigkeit, weil die hier noch beidseitig offene Papierhülse allseitig erfaßt und auf diese Weise schnell auf den Dorn aufgeschoben werden kann. Hierbei stört die am Umfang des Dornes sich rundum erstreckende Erweiterung zur Bildung der Schließkante nicht. Aber auch beim Abziehen oder Herunterfördern der Papierhülse gemäß der Erfindung ist der Widerstand nicht so groß, als daß nicht die Kraft, die über den Abstreifer auf die Hinterkante der Hülse ausgeübt wird, ausreichen würde, um die Hülse einwandfrei und glatt über den Wulst hinüberzuschieben.

Weitere Vorteile und Anwendungsmöglichkeiten der vorliegenden Erfindung ergeben sich aus der folgenden Beschreibung eines bevorzugten Ausführungsbeispieles in Verbindung mit den anliegenden Zeichnungen. Es zeigen:
- Figur 1: die zentrale Querschnittsansicht durch einen Dorn mit teilweise abgezogener Papierhülse, wobei der Abstreifer abgebrochen gezeigt und die Luftkanäle teilweise nur schematisch angedeutet sind,
- Figur 2: eine teilweise abgebrochene Seitenansicht des Abstreifers mit Hubstange und Träger und
- Figur 3: eine Draufsicht auf die Hubstange mit dem Träger und den Greifblöcken, wenn man in Richtung der Längsachse der Hubstange von deren freiem Ende in Richtung auf ihr Befestigungsende blickt.

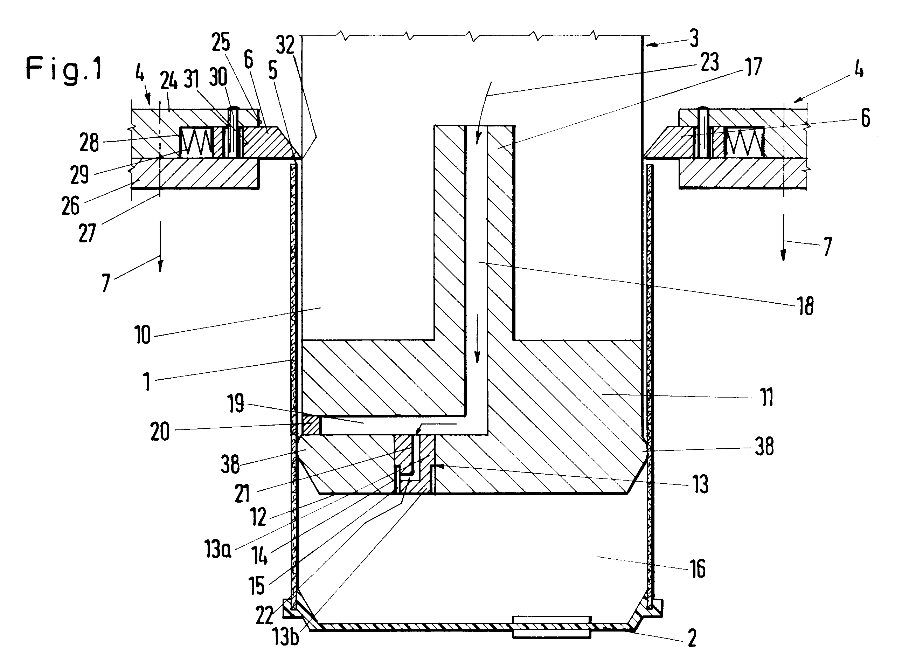

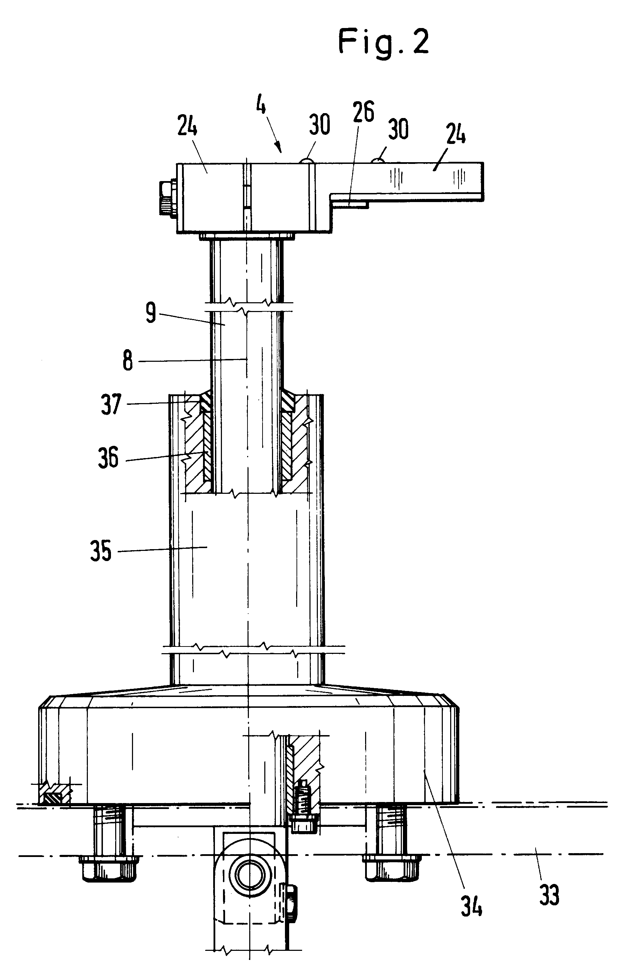

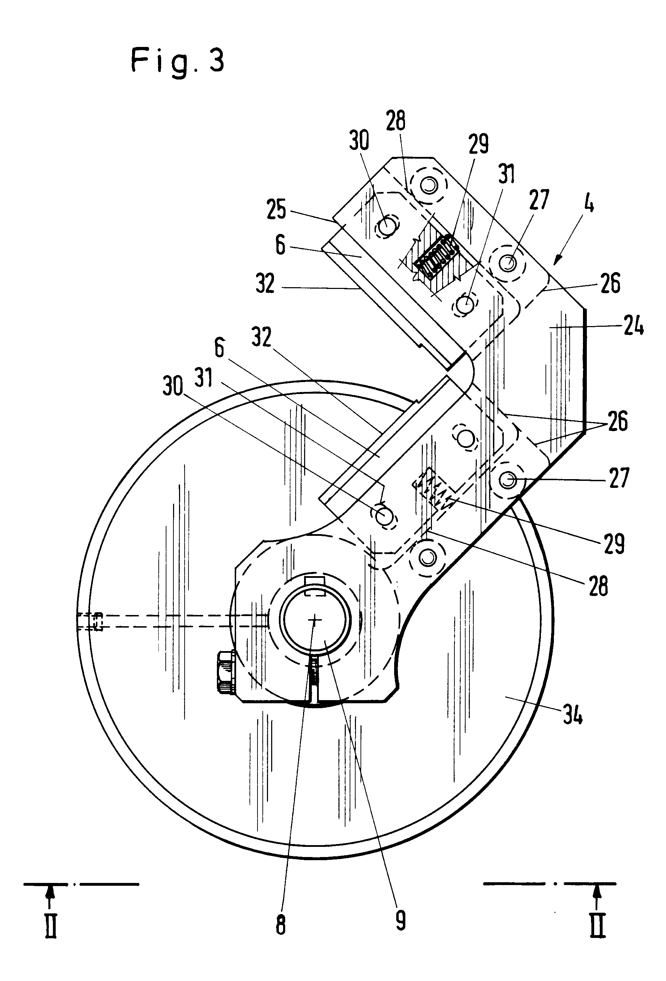

Die nur in Figur 1 dargestellte Hülse 1 hat im Querschnitt quadratische Form und ist einseitig (in Figur 1 unten) mit einem Deckel 2 aus Kunststoff ohne Trägermaterial verschlossen. In Figur 1 ist die Hülse 1 als erst teilweise von einem Dorn 3 mittels Abstreifer 4 heruntergezogen gezeigt. Man erkennt die hintere Kante 5 der Hülse 1, mit welcher die Greifblöcke 6 des allgemein mit 4 bezeichneten Abstreifers in Eingriff sind. Die Hülse 1 bewegt sich in Richtung ihrer Längsachse durch die translatorische Bewegung des Abstreifers 4 in seiner durch den Pfeil 7 gezeigten translatorischen Bewegungsrichtung; zunächst nach unten und später auf dem gleichen Wege wieder zurück in derselben Richtung nach oben. Diese Förder- bzw. Bewegungsrichtung 7 stimmt auch mit der Längsachse 8 der in den Figuren 2 und 3 gezeigten Hubstange 9 überein.

Zunächst soll der Dorn 3 anhand Figur 1 näher erläutert werden. Er ist in Richtung seiner mit der Förderrichtung 7 übereinstimmenden Längsachse aus zwei hintereinander angeordneten Teilen aufgebaut, nämlich dem Stützteil 10 und dem Kopfteil 11, durch welches die geschlossene Stirnfläche 12 gebildet wird. Diese Stirnfläche 12 wird als geschlossen bezeichnet, wenngleich ein Einsatz 13 durch Verschraubung eingefügt ist, der aus einem inneren ersten Abschnitt 13a mit größerem Durchmesser und einem äußeren, an diesen direkt anschließenden Teil 13b mit kleinerem Durchmesser aufgebaut ist. Der Einsatz 13 kann einstückig sein, wobei sein erstes Teil 13a ein hier nicht dargestelltes Außengewinde trägt, mit dessen Hilfe der Einsatz 13 in einer Bohrung 14 befestigt ist, wenngleich auch andere Befestigungsmöglichkeiten, wie z.B. Preßsitz, Nut und Feder usw. möglich sind. Während der Durchmesser der Bohrung 14 dem Durchmesser des größeren ersten Teils 13a entspricht, ist der Durchmesser 13b des zweiten Teils des Einsatzes 13 um die doppelte Breite des kreisförmigen Spaltes 15 verkleinert mit dem Ergebnis, daß durch den Einsatz 13 in der Bohrung 14 mit verhältnismäßig großem Durchmesser ein Kreisspalt 15 gebildet wird, dessen Breite etwa 0,04 mm beträgt. Dieser Kreisspalt 15 bildet den Luftaustritt in den Raum zwischen dem angespritzten Deckel 2 aus Kunststoff und der geschlossenen Stirnfläche 12 des Dorns, damit sich in diesem mit 16 bezeichneten Raum kein Vakuum beim Abziehen der Hülse 1 in Förderrichtung 7 bildet.

Der Kopfteil 11 des Dornes 3 weist einen mittigen hinteren Ansatz 17 auf, über welchen der Kopfteil 11 am Stützteil 10 des Dornes 3 durch Verschraubung, Paßsitz oder ähnliche Befestigungsmittel angebracht ist.

Der Kopfteil 11 ist von der Seite seines mittigen Ansatzes 17 aus mit einem ersten Luftkanal 18 versehen, der ebenso als Sackbohrung ausgestaltet ist wie ein zweiter Luftkanal 19, der vom äußeren Umfang des Dornes bzw. seines Kopfteils aus nach innen gebohrt und außen mit einem Stopfen 20 verschlossen ist. Dieser Stopfen besteht beispielsweise aus Stahl und hat ein Außengewinde, welches luftdicht im Kopfteil 11 eingeschraubt wird.

Ausgehend von dem zweiten Luftkanal 19 und etwa senkrecht zu diesem erstreckt sich die quer in die Stirnfläche 12 des Kopfteils 11 mündende Bohrung 14, in welche der Einsatz 13 eingebracht wird.

Der Einsatz 13 trägt ferner einen dritten Luftkanal 21, der mit dem zweiten Luftkanal 19 im Kopfteil 11 in Verbindung steht und auf der gegenüberliegenden Seite im kleineren Teil 13b des Einsatzes 13 mit einem von der Seite einmündenden vierten Luftkanal 22 in Verbindung steht. Dieser vierte Luftkanal mündet außen in den Kreisspalt 14, so daß eine Gasfließverbindung vom ersten bis zum vierten Luftkanal 18, 19, 21, 22 bis in den Kreisspalt 15 geschaffen ist, und zwar mittels herstellungstechnisch einfacher Bohrungen relativ großen Durchmessers.

Es versteht sich, daß auch der Stützteil 10 des Dornes 3 mit entsprechenden Luftzuführungseinrichtungen versehen ist, die aber zur Vereinfachung der Abbildung 1 hier nicht gezeigt sind. Es wird hierauf lediglich dadurch Bezug genommen, daß an dem in Figur 1 oberen Ende des mittigen Ansatzes 17 der gebogene Pfeil 23 die Eintrittsrichtung der Luft zeigt, die über den ersten Luftkanal 18, den zweiten Luftkanal 19, den dritten Luftkanal 21 und den vierten Luftkanal 22 schließlich in den Ringspalt 15 und über diesen in den Raum 16 gelangt, wo beim Abziehen der Hülse 1 vom Dorn 3 das Vakuum abgebaut wird.

Während die Transporteinrichtung als horizontal verlaufendes Kettenförderband oder dergleichen zu denken ist, welches in den Figuren hier nicht dargestellt wird, sieht man schon aus Figur 1 den allgemein mit 4 bezeichneten Abstreifer, der in Draufsicht gemäß Figur 3 V-förmig als Winkel ausgebildet einen Träger 24 aufweist, von dessen Innenkanten 25 her ein Raum zur Aufnahme des Greifblockes 6 eingefräst und von unten durch das Halteblech 26 abgeschlossen ist. In Figur 3 ist nur die Außenkontur des Haltebleches mit gestrichelten Linien und der Bezugszahl 26 gekennzeichnet. In Figur 2, welche eine Ansicht der Vorrichtung gemäß der Linie II-II in Figur 3 ist, sieht man das Halteblech 26 mit seinem letzten Endstück. Es ist über Schrauben 27 am Träger 24 befestigt. Die in Figur 3 ferner längs der Innenkanten 25 verlaufenden gestrichelten Linien 28 zeigen das hintere Ende des ausgefrästen Raumes zur Aufnahme der Greifblöcke 6. Gegen diese hintere Wand 28 ist in der Mitte jeweils eine Feder 29 abgestützt, die in einer zylindrischen Ausnehmung im Greifblock 6 liegt und sich auch gegen den Greifblock abstützt. Dadurch ist der Greifblock federnd vorgespannt, der außerdem über Führungszapfen 30, die am Träger 24 befestigt sind, dadurch geführt wird, daß der jeweilige Führungszapfen 30 in jeweils ein Langloch 31 ragt, dessen Längserstreckung parallel zur Mittelachse der Feder 29 und senkrecht zur Ebene der jeweiligen Innenkante 25 verläuft. Dadurch ist jeder Greifblock 6 relativ zur Innenkante 25 und zwar bei der Ausführungsform gemäß den Zeichnungen senkrecht zu dieser beweglich. Von außen von Träger 24 fort drückt die Feder 29 den Greifblock 6 nach innen über die Innenkante 25 hinaus in den Raum, der durch die Schenkel des V der Innerkante 25 aufgespannt wird. Im Betrieb drückt andererseits der in den Figuren 2 und 3 nicht dargestellte Dorn 3 entgegen der Kraft der Feder 29 den Greifblock 6 quer zur Innenkante 25 in den Raum (dargestellt durch die gestrichelte Linie 28 in Figur 3) im Träger 24 unter Zusammendrückung der Feder 29 hinein. Durch diese Kraft und Gegenkraft liegt jeweils die Vorderkante 32 des Griefblockes 6 gegen die ebene Fläche des Dornes 3 und ergreift daher gemäß der linken oberen Darstellung in Figur 1 die Hinterkante 5 der Hülse 1 zuverlässig und mit Sicherheit, wenn sich der Greifblock 6 in Förderrichtung 7 nach unten bewegt.

Die translatorische Bewegung zunächst in Richtung des Pfeiles 7 in Figur 1 nach unten zum abstreifen der Hülse 1 vom Dorn 3 und dann zurück in die gleiche Richtung nah oben, um den Abstreifer 4 weider in seine Ausgangsstellung (in Figure 1 die oberste nicht dargestellte Position) zu bringen, erfolgt über die angetriebene Hubstange 9, die über nicht näher bezeichnete Antriebshebel in Richtung ihrer Längsachse 8 gemäß Figur 2 nach oben und unten bewegt wird. Die Hubstange 9 verläuft dabei innerhalb der am Tisch 33 angebrachten Befestigung 34 in der Hülse 35, die in der Mitte oben unter Darstellung des Gleitlagers 36 und der Dichtung 37 geschnitten ist.

Aus Figur 1 seiht man ferner am Umfang des Dornes 3 im Bereich seiner geschlossenen Stirnfläche 12 die wulstförmige Erweiterung 38, mit welcher die Schließkante zur Hülse 1 gebildet wird, wenn diese in ihrer nicht gezeigten Endposition aufgeschoben ist, bei welcher der Dorn 3 die Innenform bildet, gegen welche eine nicht gezeigte, zweiteilige Außenform andrückend aufgesetzt und verspannt wird.

Im Betrieb wird zweckmäßigerweise ein mit vier radial von einer Drehachse nach außen ragenden Dornen 3 versehenes Dornrad verwendet, welches sich intermittierend dreht. Ein erster Dorn 3 mit einer Hülse 1 wird in die nicht dargestellte Anfangsposition gedreht, bei welcher die Längsmittelachse des Dornes 3 die in Figur 1 gezeigte Position hat. In dieser Stellung befindet sich der Abstreifer 4 durch Herausfahren der Hubstange 9 gemäß Figur 2 nach oben in seiner obersten oder Ausgangsstellung. Der Greifer 6 liegt mit seiner Kante 32 (zwei Greifer) gegen die ebene Oberfläche des Dornes 3 an. Nun beginnt die Abwärtsbewegung der Hubstange 9 in Förderrichtung des Pfeiles 7. Die Vorderkante 32 des Greifblockes 16 erfaßt zwei der vier geraden Hinterkanten 5 der Hülse 1 und bewegt diese nach unten, wobei der Raum 16 gebildet wird. Luft wird in diesen Raum über die Luftkanäle 18, 19, 21, 22 und den Kreisspalt 15 eingeblasen, so daß kein Vakuum entsteht und die Hülse 1 schnell vom Dorn 3 heruntergezogen werden kann, während sich die Hubstange 9 in die Hülse 35 hineinbewegt. Hierbei bewegt sich die abgestreifte Papierhülse vom Dorn 3 in einen im Abstand unter dem Dorn 3 in Förderrichtung 7 angeordneten Transportkorb in der Transporteinrichtung und wird dort eingeschoben. Nun ist die Endposition erreicht.

Der Antrieb kehrt die Bewegung der Hubstange 9 um. Die Hubstange 9 bewegt sich nun in Richtung ihrer Längsachse 8 gemäß Figur 2 nach oben, d.h. gemäß Figur 3 entgegen der Blickrichtung. Währenddessen dreht sich das Dornrad so in Gegenuhrzeigerrichtung, wenn man auf Figur 1 blickt, daß der freie Dorn 3 sich nach rechts oben fortbewegt, während ein neuer, eine weitere Papierhülse 1 tragender Dorn 3 von links oben in die in Figur 1 gezeigte Position hereingedreht wird. Daß sich währenddessen der Abstreifer 4 mit dem V-förmigen, winkelförmigen Träger 25 währenddessen nach oben in Richtung entgegengesetzt der Förderrichtung 7 bewegt, stört das Erreichen der Anfangsposition des Dornes 3 nicht. Dann beginnt das Spiel erneut.

## Patentansprüche

1. Verfahren zum Fördern einer einseitig verschlossenen Hülse (1) aus Papier, Pappe oder dergleichen von einem sie tragenden, in der Anfangsposition befindlichen, schrittweise bewegbaren Dorn (3) einer Bearbeitungsstation in eine Transporteinrichtung, bei welchem die Hülse (1) an ihren in Förderrichtung (7) hinteren Kanten (5) ergriffen und in Richtung ihrer Längsachse auf einem geraden Weg in die Transporteinrichtung geschoben wird, während Luft in das Innere (16) der Hülse (1) eingeblasen wird, dadurch gekennzeichnet, daß die Hülse (1) auf einem höchstens die Hälfte ausmachenden Teil ihrer Hinterkante (5) von einem in seiner Ausgangsstellung befindlichen Abstreifer (4) erfaßt wird und daß der Abstreifer (4) sich nach der Abstreifbewegung, während der leere Dorn (3) aus seiner Anfangsposition wegbewegt wird und ein neuer Dorn (3) mit Hülse (1) in die Anfangsposition bewegt wird, wieder in seine Ausgangsstellung neben die nächste Hülse (1) bewegt.

2. Vorrichtung zum Fördern einer Hülse (1) aus Papier, Pappe oder dergleichen von einer Bearbeitungsstation mit Dorn (3) in eine Transporteinrichtung, bei welcher ein mit der Förderrichtung (7) hinteren Kante (5) der Hülse (1) in Eingriff bringbarer Abstreifer (4) translatorisch bewegbar vorgesehen und antreibbar ist, dadurch gekennzeichnet, daß der Abstreifer (4) an einer in Richtung ihrer Längsachse (8) bewegbaren Hubstange (9) angebracht und, in Richtung dieser Längsachse (8) gesehen, höchstens den halben Umfang des Dornes (3) umfaßt.

3. Vorrichtung nach Anspruch 2, dadurch gekennzeichnet, daß der Abstreifer (4) V-förmig ausgestaltet ist und einen winkelförmigen Träger (24) aufweist, der an den zwei einander zugewandten Innenkanten (25) des V federbelastete, in Richtung senkrecht zur Innenkante (25) bewegbare Greifblöcke (6) haltert.

4. Vorrichtung nach Anspruch 2 oder 3, dadurch gekennzeichnet, daß der Dorn (3) eine geschlossene Stirnfläche (12) mit einem einen Luftaustritt (15) bildenden Einsatz (13) und im Inneren Luftkanäle (18, 19, 21, 22) aufweist.

5. Vorrichtung nach einem der Ansprüche 2 bis 4, dadurch gekennzeichnet, daß der Dorn (3) zur Bildung einer Schließkante am Umfang eine Erweiterung (38) aufweist.

## Claims

1. A method of conveying a sleeve (1) which is closed at one end and which consists of paper, cardboard or the like, from a stepwisely movable mandrel (3) carrying it and disposed in the starting position on a processing station into a transporter means, where the sleeve (1) is gripped at its - in the direction of conveyance (7) - rear edges (5) and is pushed in the direction of its longitudinal axis along a straight path and into the transporter means, while air is blown into the interior (16) of the sleeve (1), characterised in that the sleeve (1) is over a part of its rear edge (5) which is not more than half the length thereof, gripped by a scraper (4) which is in its starting position and in that the scraper (4) moves back again into its starting position alongside the next sleeve (1) following the scraper movement, while the empty mandrel (3) is moved away from its starting position and a new mandrel (3) carrying a sleeve (1) is moved into the starting position.

2. An apparatus for conveying a sleeve (1) consisting of paper, cardboard or the like, from a processing station with a mandrel (3) into a transporter means, wherein a scraper (4) which is adapted to be driven and move in a translatory sense is adapted to be brought into engagement with that edge (5) of the sleeve (1) which is at the rear in relation to the direction (7) of conveyance, characterised in that the scraper (4) is mounted on a lifting rod (9) adapted for movement in the direction of its longitudinal axis (8) and, when viewed in the direction of this longitudinal axis (8), comprises not more than half the periphery of the mandrel (3).

3. An apparatus according to claim 2, characterised in that the scraper (4) is of V-shaped construction and has an angled carrier (24) mounting two gripper blocks (6) adapted for movement in a direction at right-angles to the inner edge (25) and spring loaded on the two mutually facing inner edges (25) of the V.

4. An apparatus according to claim 2 or 3, characterised in that the mandrel (3) has a closed end face (12) with an inset (13) forming an air outlet (15) and has in its interior air passages (18, 19, 21, 22).

5. An apparatus according to one of claims 2 to 4, characterised in that the mandrel (3) has on its periphery a widened-out portion (38) to form a closing edge.

## Revendications

1. Procédé pour convoyer un manchon (1), fermé sur un côté, en papier, carton ou analogues, à partir d'un mandrin (3) portant le manchon, se trouvant dans sa position de départ, pouvant subir un déplacement pas à pas et appartenant à un poste d'usinage, jusqu'à un dispositif de transport dans lequel le manchon (1) est saisi en ses arêtes (5) disposées en arrière dans la direction du transport (7), et est poussé dans le dispositif de transport selon une trajectoire rectiligne dans la direction de son axe longitudinal, de l'air étant insufflé dans le volume intérieur (16) du manchon (1), caractérisé en ce que le manchon (1) est, par une racle (4) se trouvant dans sa position de départ, saisi sur une partie de son arête arrière (5) au moins égale à la moitié de cette dernière, et que la racle (4), après le mouvement de raclage, au cours duquel le mandrin vide (3) est déplacé à partir de sa position de départ, et un nouveau mandrin (3), avec un manchon (1), est déplacé dans la position initiale, est de nouveau déplacée dans sa position de départ, à côtè du manchon (1) suivant.

2. Dispositif pour convoyer un manchon (1) en papier, carton ou analogues, d'un poste d'usinage, comportant un manchon (3), à un dispositif de transport, dans lequel on prévoit une racle (4), pouvant entrer en prise avec l'arête (5) du manchon située en arrière dans la direction du convoyage (7), cette racle pouvant subir un mouvement de translation et pouvant être entrainée, caractérisé en ce que la racle (4) est rapportée à une barre de levage (5), pouvant sa déplacer dans la direction de son axe longitudinal (8), et, quand on regarde dans la direction de cet axe longitudinal (8), englobe au plus la moitié de la circonférence du mandrin (3).

3. Dispositif selon la revendication 2, caractérisé en ce que la racle (4) a la forme d'un V et comporte un longeron (24) en cornière, qui, au niveau des deux arêtes intérieures (25) du V en regard l'une de l'autre, porte des pièces de saisie (6), à ressort, pouvant se déplacer dans la direction perpendiculaire à l'arête intérieure (25).

4. Dispositif selon la revendication 2 ou 3, caractérisé en ce que le mandrin (3) comporte une surface frontale fermée (12) avec une pièce d'insertion (13) formant un orifice de sortie d'air (15), et, dans son volume intérieur, des gaines d'air (18, 19, 21, 22).

5. Dispositif selon l'une des revendications 1 à 4, caractérisé en ce que le mandrin (3) présente, pour former une arête de fermeture sur sa périphérie, un élargissement (38).
